# EUROPEAN PATENT APPLICATION

(11) **EP 1 121 849 A2**
(43) Date of publication of application: **08.08.2001**
(21) Application number: 01102215.9
(22) Date of filing: 31.01.2001
(51) Int. Cl.: A01D 34/14, A01D 17/06, A01D 45/00, A01D 31/00

(54) **Apparatus for harvesting herbaceous plants**

(30) Priority: 31.01.2000 IT MI000173
(71) Applicant: Micros S.n.c. di Nervi Stefano & C., 24060 Gorlago BG (IT)
(72) Inventor: Ondei, Corrado, Micros S.n.c. di Nervi Stefano & C, 24060 Gorlago BG (IT); Patelli, Angelo, Micros S.n.c di Nervi Stefano & C, 24060 Gorlago BG (IT)
(74) Representative: Trupiano, Federica

(57) **Abstract**

An apparatus (1) for cutting herbaceous plants, in particular valerian plants, comprising cutting means (5, 6) to cut said herbaceous plants, provided with blades (6) that have a rectilinear cutting edge (7) and that are movable with alternate motion in a direction perpendicular to the advancing direction of said apparatus (1).

The apparatus (1) also comprises conveying means (15, 16) to transport said herbaceous plants from a cutting zone to a collection zone, said conveying means (15, 16) comprising sieving means (16).

## Description

The present invention relates to an apparatus for harvesting herbaceous plants that must be cut under the soil level, in particular an apparatus for harvesting valerian.

In harvesting valerian, unlike other herbaceous plants cultivated in vegetable gardens, such as lettuce, rocket salad, spinach, etc., whose harvesting is limited to the collection of young loose leaves, the plant must be cut at the collect level, i.e., just under the soil level, not to damage a small rosette that forms at the level of the fourth or fifth leaf of the plant.

In the known art, machines are used for cutting valerian that are of the self-moving type, i.e. that have an own motor system or are towable by a tractor.

These machines are very bulky, both in the case of self-moving machines and in the case of machines towed by a tractor, for which, besides the bulk of the machine, there adds also the bulk of the tractor towing them. Because of the marked bulk, the above machines can operate only outdoors, i.e. they cannot be used in the inside of greenhouses where there lacks a space sufficient to allow the movements of the machine and the possible tow means. Besides, the machines according to the known art are suitable to operate only on sandy soils, as the cutting means of valerian plants which they are provided with, cannot support, without being damaged, hits against stones or other obstacles. Besides, the machines of the known art move on wheels, which involves the risk of being unstable and having a poor precision in cutting the plants. In fact, the machines must move within the passages between the plots wherein valerian is cultivated, where the soil-bed is usually rough and irregular. This involves jolts of the machine and the possible towing means, which, besides jeopardizing their stability, also affects the cutting means, causing the latter to be imprecise, with damage risks for the plants to be harvested.

Object of the present invention is to provide an apparatus for cutting herbaceous plants, in particular valerian, such as to allow to obtain a high cutting precision and also such as to be stable and little bulky, so as to be utilizable also in greenhouses.

According to a first aspect of the present invention, an apparatus is provided for cutting herbaceous plants, comprising cutting means to cut said herbaceous plants, characterized in that said cutting means comprise blades that have a rectlinear cutting edge and that move with alternate motion in a direction substantially perpendicular to the advancing direction of said apparatus.

To the cutting means, sieving means are integrally associated that have a plurality of teeth located on the side of said blades opposite to said cutting edge.

Preferably, said sieving means comprise comb-like means.

The cutting means are associated to positioning means suitable to keep the cutting means in a substantially constant position with respect to the soil surface.

According to a further aspect of the present invention, an apparatus is provided for cutting herbaceous plants, in particular valerian plants, comprising cutting means to cut said herbaceous plants, conveying means to transport said herbaceous plants from a cutting zone to a collection zone, characterized in that said conveying means comprise sieving means.

Thanks to the invention, it is possible to carry out the cutting of an herbaceous plant, in particular a valerian plant, with great precision, i.e. cutting the plants substantially always at the same height, which allows to obtain a harvested product of uniform quality, without risks of damages and, therefore, wastes. Besides, the apparatus according to the invention allows to easily separate the plants cut from almost all the possible topsoil or sand collected together with said plants during the cutting operations.

The invention will be now described in the following by way of non-limiting example, with reference to the attached drawings, wherein:
Figure 1 is a schematic elevation view of an apparatus according to the invention;
Figure 2 is a top view of the apparatus of Figure 1.

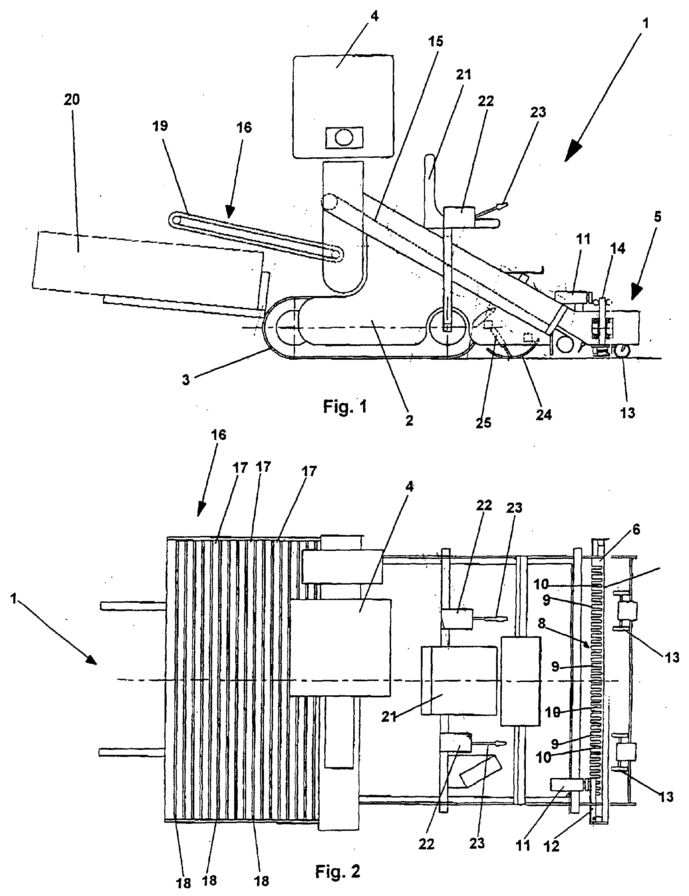

With reference to Figure 1, there is indicated as a whole by 1 an apparatus according to the invention, comprising a frame 2 provided with advancing means 3 in the form of tracks, activated, either directly or indirectly, by a motor 4. Tracks 3 impart apparatus 1 a high stability in the advancement on soil 26, even when it is rough. To the front part of frame 2 there is cantilever-fixed a cutting device 5 for cutting valerian plants. The cutting device 5 comprises a blade 6 constituted of a front part 7 rectilinear and sharp, that acts as a cutting edge, and a comb-shaped back part 8, comprising a plurality of teeth 9, separated by gaps 10.

Blade 6 is caused to move according to a rectilinear alternating motion by a motor 11, for instance a hydraulic motor on whose shaft an eccentric is mounted that activates a connecting rod 12 connected to an end of blade 6. The motion of blade 6 takes place in a direction substantially perpendicular to the advancing direction of apparatus 1.

The serrated back part 8 of blade 6 acts as a sieve, causing the topsoil and the sand collected with the valerian plants cut to partly fall on the soil by gravity through the interstices 10 between teeth 9, allowing in this way a first cleaning from alien material. The size of said gaps 10 is so selected that the valerian plants cut cannot pass through the same.

The cutting device 5 also comprises sensors 13, for instance feeler pins, mounted before blade 6 in the advancing direction of apparatus 1. Sensors 13 detect the level variations in the surface of soil 26, and work in connection with operating cylinders, for instance hydraulic cylinders 25 which, through sliding blocks 24, allow the variation in height of blade 6, according to the signal received from sensors 13, so as to keep blade 6 at a substantially constant height with respect to the surface of soil 26.

Behind blade 6 a first conveyor belt 16 is mounted which collects the plants cut by blade 6, and conveys them to a second conveyor belt 16, constituted of several roller 17, realized for instance with metal tubular elements, separated by gaps 18 and activated through a chain 19. The second conveyor belt 16 acts also as a sieve, allowing the residues of topsoil and sand still present on the plants the fall to the soil, through gaps 18. The size of the gaps is so selected as to prevent the plants conveyed on the second conveyor belts 16 from passing through said gaps. Once they have reached the back end of the second conveyor belt 16, the valerian plants are unloaded in a collection container 20 mounted on the back part of the apparatus 1. The surface of the first conveyor belt 15 intended for coming in touch with the plants cut is realized from a material for alimentary use, for instance PVC for alimentary use.

Apparatus 1 also comprises a seat 21 for an operator, to which hand controls 23 are associated that are suitable to control two hydraulic distributors 22 that act on corresponding hydraulic ratio-motors to regulate the velocity of tracks 3, and consequently, the advancing velocity of apparatus 1, without sudden changes, not even in the starting step.

In the central part of frame 2 of apparatus 1, an operating cylinder, for instance hydraulic, is mounted, connected to frame 1. By activating said operating cylinder, it is possible to lift the front part of apparatus 1, in particular the cutting device 5, to prevent it from being damaged during the transfer shifting of apparatus 1. At the time of starting the operations of cutting valerian plants, the operating cylinder is so activated as to lower the cutting device 5 until feeler pins 13 get in touch with the soil, adjusting the cutting depth of the plants.

In the practice, the materials, size and execution details may be different from those indicated herein, but technically equivalent to the same, without for this falling outside the juridical scope of the present invention.

## Claims

1. An apparatus (1) for cutting herbaceous plants, in particular valerian plants, comprising cutting means (5, 6) to cut said herbaceous plants, characterized in that said cutting means (5, 6) are provided with blades (6) that have a rectlinear cutting edge (7) and that move with alternate motion in a direction perpendicular to the advancing direction of said apparatus (1).

2. The apparatus according to claim 1, comprising also conveying means (15, 16) to transport said herbaceous plants from a cutting zone to a collection zone, said conveying means (15, 16) comprising sieving means (16).

3. An apparatus (1) for cutting herbaceous plants, in particular valerian plants, comprising cutting means (5, 6) to cut said herbaceous plants, conveying means (15, 16) to transport said herbaceous plants from a cutting zone to a collection zone, characterized in that said conveying means (15, 16) comprise sieving means (16).

4. The apparatus according to claim 3, wherein said cutting means (5, 6) comprise blades (6) that have a rectilinear cutting edge (7) and that are movable with alternate motion in a direction perpendicular to the advancing direction of said apparatus (1).

5. An apparatus (1) according to one of claims 1, 2 or 3, wherein said cutting means (5, 6) comprise sieving means (8) having a plurality of teeth (9) located on the side of said blades (6) opposite to said cutting edge (7).

6. The apparatus according to any of the preceding claims, wherein said cutting means (5, 6) are associated to activation means (11, 12) suitable to activate said cutting means with a rectilinear alternating motion in said direction perpendicular to the advancing motion of apparatus (1).

7. An apparatus (1) according to claim 6, wherein said activation means (11, 12) comprise a motor (11) that activates, through eccentric means, a connecting rod (12) connected to said cutting means (5, 6).

8. An apparatus (1) according to claim 7, wherein said motor (11) is an hydraulic motor.

9. An apparatus (1) according to any of the preceding claims, and comprising also advancing means (3) activated by said motorization means (4).

10. The apparatus according to claim 9, wherein said advancing means comprise track means (3).

11. The apparatus according to claim 9 or 10, wherein said advancing means are associated in their operation by adjusting means (22, 23) suitable to adjust the advancing velocity of the apparatus (1).

12. An apparatus (1) according to claim 11, wherein said adjusting means (22, 23) comprise hydraulic ratio-motors associated to hydraulic distributing means (22).

13. An apparatus (1) according to claim 12, wherein said hydraulic distributing means (22) are provided with hand-activated control means (23).

14. An apparatus (1) according to any of the preceding claims, wherein said cutting means (5, 6) comprise sensors (13) suitable to detect level variations of a soil whereon apparatus (1) moves.

15. The apparatus according to claims 14, wherein said sensors are feeler pins (13).

16. An apparatus (1) according to claim 14 or 15, wherein said sensors (13) are associated in their operation to positioning means (24, 25) suitable to allow the height variation of said cutting means (5, 6) according to the level variations detected by said sensors (13).

17. An apparatus (1) according to any of claims 2-16, wherein said conveying means (15, 16) comprise conveyor belts (15).

18. The apparatus according to claim 17, wherein a surface of said conveyor belts (15) intended for getting in touch with said plants is made from a material for alimentary use.

19. An apparatus (1) according to claim 18, wherein said material for alimentary use is PVC for alimentary use.

20. An apparatus (1) according to one of claims 2-19, wherein said sieving means comprise roller conveyors (16).

21. The apparatus according to claim 20, wherein said roller conveyor means (16) comprise a plurality of tubular elements (17) parallel to each other, separated by gaps (18), said tubular elements (17) being so activated as to rotate about the respective longitudinal axes.

22. An apparatus (1) according to claim 21, wherein said tubular elements (17) are caused to rotate through chain means (19).

23. An apparatus (1) according to any of the preceding claims, comprising further lifting means to lift from the soil said cutting means (5, 6).

24. The apparatus according to any of the preceding claims, further comprising a seat (21) for an operator.

25. An apparatus (1) according to any of the preceding claims, characterized in that it is so sized as to allow its utilization in greenhouses.
